# FASCICULE DE BREVET EUROPEEN

(11) **EP 0 947 951 B1**
(45) Date de publication et mention de la délivrance du brevet: **04.10.2006**
(21) Numéro de dépôt: 99400755.7
(22) Date de dépôt: 29.03.1999
(51) Int. Cl.: G06K 19/07

(54) **Dispositif de télétransmission par couplage inductif**
Induktiv gekoppeltes Fernübertragungsgerät
Teletransmission apparatus using inductive coupling

(30) Priorité: 31.03.1998 FR 9803962
(43) Date de publication de la demande: 06.10.1999
(73) Titulaire: COMMISSARIAT A L'ENERGIE ATOMIQUE, 75015 Paris (FR)
(72) Inventeur: Thomas, Thierry, 38760 Varces Allières et Risset (FR)
(74) Mandataire: Poulin, Gérard

(56) Documents cités:
- WO-A-96/38805
- WO-A-97/05504
- US-A- 5 721 535

## Description

### Domaine de l'invention

L'invention concerne un dispositif de télétransmission pour objets portatifs (du type carte, billet, étiquette, etc.) liés par couplage inductif à une station fixe (du type lecteur de cartes, interrogateur d'étiquettes, etc.).

Elle trouve des applications dans tous les domaines d'échanges de données sans contact, par voie inductive, entre un objet portatif et une station fixe et, en particulier, dans le domaine de l'identification de choses ou d'objets, dans le domaine du contrôle d'accès, par exemple, à des services informatiques, ou dans le domaine du péage par carte.

### Etat de la technique

Il est connu, dans le domaine de l'échange de données sans contact, d'utiliser des systèmes monodirectionnels ou bidirectionnels, dans lesquels l'échange de données se fait par voie inductive entre des objets portatifs et une station fixe.

On appelle « station fixe », un interrogateur, ou un lecteur, ou tout type de récepteur dont l'encombrement est relativement important et qui comporte ses propres moyens d'alimentation en énergie, qui sont généralement des appareils électriques classiques.

On appelle « objet portatif », une carte à mémoire, ou une étiquette, ou tout type de transpondeur d'encombrement réduit, qui doit faire appel à une source d'énergie autonome très restrictive pour envoyer des données à la station fixe. La taille des objets portatifs est généralement réduite, par exemple au format d'une carte de crédit. L'objet portatif peut être actif, c'est-à-dire qu'il contient sa propre source d'alimentation, telle qu'une pile ou une batterie, ou bien il peut être passif, c'est-à-dire qu'il est téléalimenté. Un objet portatif téléalimenté puise son énergie depuis la station fixe par le biais du couplage inductif qui, dans ces systèmes, est réalisé au moyen d'antennes du type bobinages en circuit conducteur. Par conséquent, l'objet portatif n'est plus alimenté dès lors qu'il sort du champ électromagnétique de la station fixe, c'est-à-dire dès lors que les conditions de couplage nominal ne sont plus respectées.

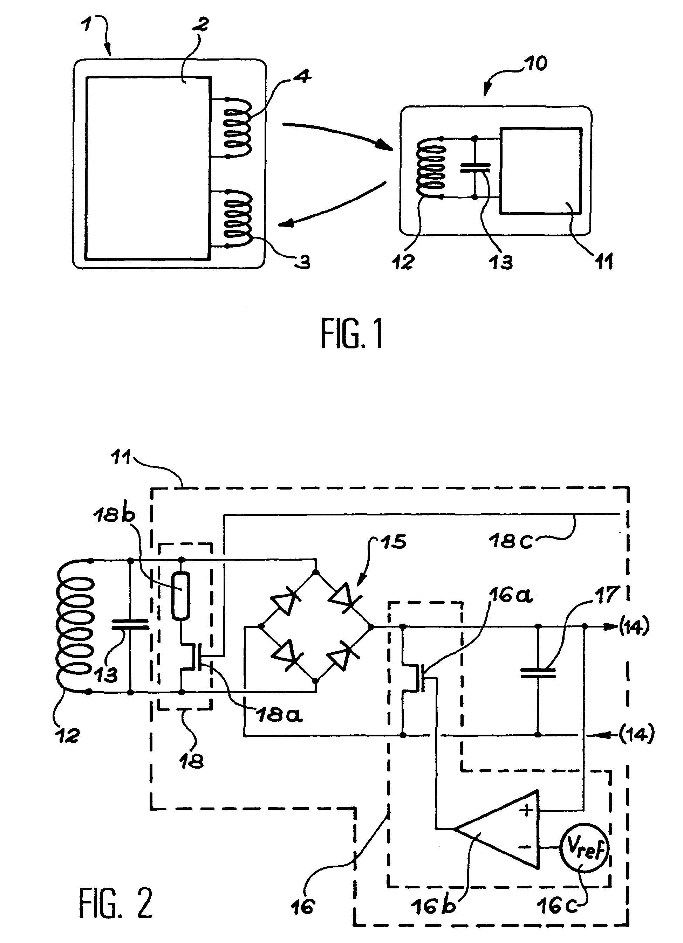

Classiquement, un système d'échange de données à distance par couplage inductif se présente de la façon représentée sur la figure 1. Un système d'échange de données comporte donc, généralement, une station fixe 1 et un ou plusieurs objet(s) portatif(s) 10 ; la station fixe 1 comporte un ensemble de circuits électroniques, référencé 2, couplé à deux bobinages d'antennes 3 et 4. L'un des bobinages d'antenne (bobinage 4) émet un champ magnétique alternatif qui permet d'envoyer des informations destinées à l'objet portatif 10. Un second bobinage d'antenne 3 assure le recueillement d'un signal induit par l'émission secondaire provoquée par le courant induit dans l'antenne de l'objet portatif.

Dans le mode de réalisation, représenté sur cette figure 1, la station fixe comporte deux antennes : une pour la réception, l'autre pour l'émission des messages ; il est toutefois possible d'utiliser une seule antenne pour réaliser ces deux fonctions.

L'objet portatif 10 comporte un ensemble de circuits électroniques 11 connecté aux bornes d'un bobinage d'antenne 12. Selon le mode de réalisation représenté sur cette figure 1, une capacité 13 est connectée en parallèle aux bornes de l'antenne 12 de manière à former un circuit résonant.

Le brevet US 5 721 535 représente en sa figure 1 un exemple d'une telle réalisation, l'équivallent du circuit 11 ayant la référence 110.

Généralement, la station fixe émet un champ magnétique alternatif de forte amplitude dans un volume d'espace choisi en fonction de l'application envisagée ; l'objet portatif interagit sur ce champ magnétique par le biais de son antenne en émettant un champ magnétique secondaire par loi de LENZ, en fonction de l'impédance des circuits connectés sur cette antenne. En retour, ce champ secondaire induit une tension détectable dans l'antenne de la station fixe.

Une telle méthode d'échange de données est décrite, par exemple, dans le brevet US-A-3 299-_424 ou dans le brevet WO 97/05504. En particulier, ces brevets décrivent un système d'échange de données dans lequel l'objet portatif est téléalimenté et comporte un seul bobinage d'antenne. Dans ces brevets, le moyen de transmission de l'information de l'objet portatif vers la station fixe consiste en une impédance en série avec un interrupteur, l'ensemble étant connecté aux bornes de l'antenne. L'impédance des circuits connectés au bobinage de l'antenne est ainsi modulée, de même que le champ magnétique secondaire et, par suite, la tension associée induite dans l'antenne de la station fixe.

Par ailleurs, ce brevet décrit l'utilisation d'une capacité associée au bobinage de l'antenne de l'objet portatif, de manière à obtenir un circuit résonant inductance-capacité parallèles, dont le but est d'augmenter la tension aux bornes de l'antenne par surtension par rapport à la force électromotrice induite (fem) dans le bobinage et d'augmenter l'effet induit en retour dans le bobinage d'antenne de la station fixe, du fait de la présence de l'objet portatif.

Cependant, les moyens utilisés, dans ce brevet, pour récupérer la téléalimentation sont étroitement associés aux moyens de transfert d'informations qui consiste, dans ce système, en une diode tunnel.

D'autres documents plus récents, tels que les brevets US-A-4 196 418 et FR-A-2 623 311 décrivent des objets portatifs téléalimentés dans lesquels la téléalimentation est récupérée par l'objet portatif à partir de la tension induite disponible aux bornes de l'antenne de l'objet portatif ; cette tension, qui est une tension alternative aux bornes de l'antenne, est transformée en tension continue par un redresseur qui consiste, dans ces systèmes, en un doubleur de tension à deux diodes connectées à une des bornes de l'antenne, l'autre borne de l'antenne étant connectée au point milieu de deux capacités de stockage recueillant la tension redressée.

Un autre document, le brevet EP-0 204 542, décrit un système qui comporte des moyens de redressement de la tension réalisés à l'aide de deux diodes, le milieu du bobinage de l'antenne étant connecté à la référence zéro du montage.

Dans d'autres systèmes, les moyens de redressement sont réalisés à partir d'un pont à quatre diodes, à savoir le pont de GRÄETZ, ou par des transistors MOS câblés en diodes (c'est-à-dire des transistors dont la grille est connectée au drain). Ces moyens de redressement sont décrits notamment dans les documents US-A-5 479 172 et WO-96 38805.

Le brevet WO 97/05504 décrit un système d'échange de données qui comporte un redresseur tripleur de tension, ainsi qu'une fonction de modulation qui agit sur l'antenne de l'objet portatif, elle-même associée à une capacité en parallèle pour former un circuit résonant.

Les systèmes décrits dans les brevets US-4 196 418 et FR-2 623 311, déjà cités précédemment, comportent, de plus, une fonction de stabilisation de la tension redressée, ajoutée à la fonction de téléalimentation décrite ci-dessus. Cette fonction de stabilisation de la tension redressée est réalisée par un composant électronique simple, à savoir une diode ZENER. En effet, la force électromotrice induite dans le bobinage de l'antenne de l'objet portatif est proportionnelle au coefficient de couplage mutuel entre ce bobinage et celui de l'antenne de la station fixe, ce coefficient de couplage pouvant varier dans une plage importante de valeurs correspondant à la souplesse du fonctionnement sans contact recherchée. La tension disponible aux bornes de l'objet portatif est fonction de cette force électromotrice, de l'impédance interne de l'antenne et de la charge qui lui est connectée. Aussi, une diode ZENER permet, de par sa caractéristique tension-courant non linéaire, de stabiliser simplement la tension redressée.

La fonction de stabilisation de la tension redressée peut également être réalisée au moyen d'un arrangement électronique, composé d'une référence de tension, d'un amplificateur différentiel et d'une résistance commandée (par exemple, un transistor). Cet arrangement électronique, appelé généralement « régulateur SHUNT », assure l'adaptation de la charge connectée à un générateur de tension ayant une impédance interne non négligeable, de manière à réguler la tension en sortie de ce générateur à une valeur donnée ; le générateur de tension peut être, par exemple, une antenne associée à un redresseur.

De nombreux documents décrivent un régulateur SHUNT dans l'application à un système d'échange de données à distance. Ces documents sont, par exemple, les brevets US-A-5 302 954, US-A-5 479 172, et EP-A2-0 706 151.

Dans les systèmes d'échange de données à distance, il est possible d'utiliser, comme régulateur de tension, un régulateur série qui fournit, à sa sortie, une tension régulée d'une valeur donnée, à partir d'une tension non régulée de valeur plus élevée, appliquée à son entrée. Cependant, ce type de régulateur a l'inconvénient de ne pas contrôler la tension qui est appliquée à son entrée, en conséquence de quoi cette tension peut prendre une valeur importante. Dans le cas d'un objet portatif, dans lequel tous les circuits électroniques peuvent être intégrés sur une même puce électronique, les contraintes de tenue en tension s'appliquent à tous les niveaux du circuit, jusqu'aux bornes du bobinage de l'antenne. Un tel régulateur en série est donc mal adapté à la réalisation d'un objet portatif.

Par ailleurs, dans certains de ces documents, la fonction de modulation est réalisée par un commutateur qui court-circuite l'antenne, ou bien par un commutateur en série avec une capacité, l'ensemble étant connecté aux bornes de l'antenne pour modifier sa fréquence de résonance.

Dans d'autres dispositifs, la fonction de modulation est réalisée par un commutateur en série avec une résistance, ce qui permet d'agir sur le coefficient de qualité de l'antenne sans modifier la fréquence de résonance. Ce type de fonction de modulation est décrit, par exemple, dans les brevets EP-A2-0 204 542 et WO 97/05504.

D'autres types de fonctions de modulation sont réalisés au moyen d'une diode, ou bien d'une diode ZENER, ou encore d'une inductance.

Cependant, dans le cas d'une modulation réalisée par un ensemble résistance-commutateur en série, ou simplement par un commutateur connecté en parallèle aux bornes de l'antenne ou sur la tension redressée, le coefficient de qualité de l'antenne résonante en charge est modifié, ce qui modifie l'état de l'objet portatif. Or, à cette modification du coefficient de qualité correspond une modification de l'énergie dissipée, prise sur l'énergie fournie par la station fixe, ce qui explique pourquoi cette modulation peut être détectée par la station fixe.

Cependant, une telle modulation modifie la charge en courant de l'antenne ; la tension aux bornes de l'antenne et la tension redressée sont donc modifiées en conséquence et la régulation SHUNT a pour effet de compenser la modification de charge et, ainsi, d'annuler l'effet de modulation recherché. Une telle fonction de modulation est donc incompatible avec la fonction de régulation SHUNT.

Dans le cas d'une modulation réalisée par un ensemble capacité-commutateur en série, connecté en parallèle aux bornes de l'antenne de manière à décaler la fréquence de résonance de cette antenne, la modulation, est compatible avec la fonction de régulation SHUNT ; par contre, elle réagit de façon à compenser l'éventuelle modification de la tension disponible aux bornes de l'antenne, ce qui provoque une modulation de charge concomitante, sauf si l'excursion de la modulation de la fréquence de résonance est symétrique par rapport à la fréquence du champ magnétique émis par la station fixe, comme décrit dans le brevet EP-A-0 198 642. Dans ce cas, la dissipation de l'énergie de l'objet portatif reste la même pour les deux états binaires de la modulation.

Dans un cas plus général, la double modulation, sur la fréquence de résonance et, involontairement, sur le coefficient de qualité, rend délicate la détection de cette modulation au niveau de la station fixe.

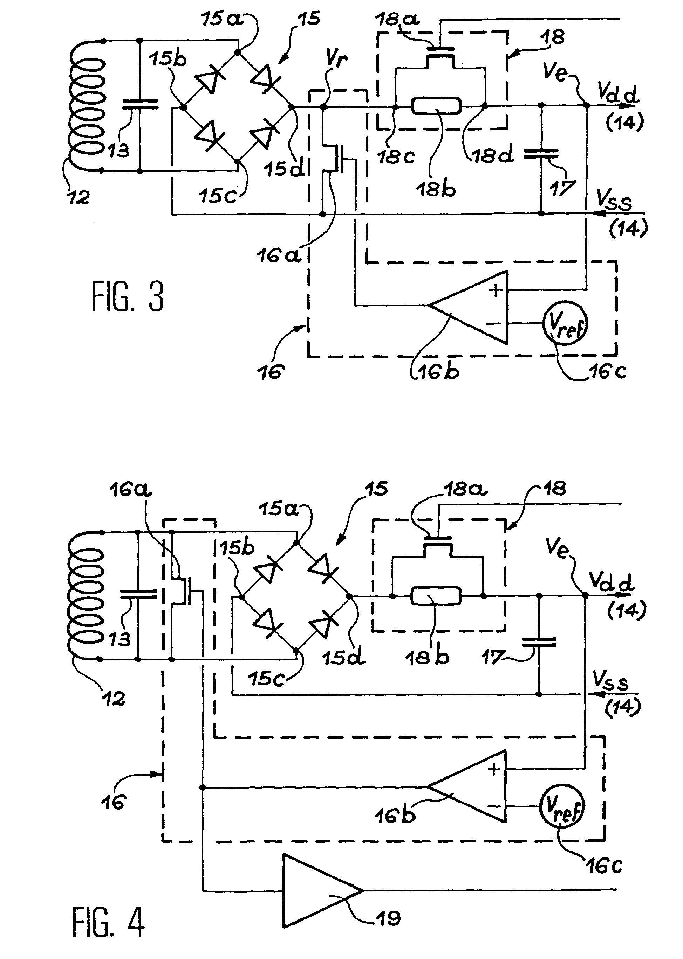

Sur la figure 2, on a représenté, un exemple de moyens de régulation et de moyens de modulation, par soucis de simplification, sur un même schéma de dispositif de télétransmission, sachant qu'une association telle qu'illustrée n'est pas utilisable. Dans ce dispositif, on retrouve les éléments de l'objet portatif déjà décrits en figure 1, à savoir : l'antenne 12 montée en parallèle sur la capacité 13, et l'ensemble de circuits électroniques 11. Ces circuits électroniques comportent un redresseur de tension 15 (qui peut être, comme montré sur cette figure 2, un pont de GRÄETZ), des moyens de modulation 18, un régulateur de tension 16 et une capacité de stockage 17 destinée à fournir une tension régulée Vdd pour alimenter l'ensemble des circuits électroniques.

Selon le dispositif représenté sur la figure 2, le régulateur 16 est un régulateur SHUNT, tel que décrit précédemment ; il comporte un transistor 16a, un amplificateur différentiel 16b et une référence de tension 16c.

Le modulateur 18 est réalisé par une impédance 18b en série avec un transistor commutateur 18a, cet ensemble impédance-transistor étant connecté aux bornes de l'antenne 12. Le commutateur 18a est commandé par un signal numérique transmis par la ligne de tension 18c, via la grille du transistor. Ce signal numérique représente le message à transmettre sous la forme de données binaires série.

Dans un tel système, la transmission de données de l'objet portatif vers la station fixe peut être interprétée comme la modulation d'un ou de plusieurs des paramètres d'un circuit résonant de type inductance-capacité-résistance. Ces paramètres sont la fréquence de résonance et le coefficient de qualité de l'ensemble, c'est-à-dire l'antenne résonante (formée par l'ensemble 12, 13) chargée par les circuits électroniques 11. L'énergie dissipée dans l'objet portatif est prise sur l'énergie fournie à l'antenne de la station fixe pour émettre le champ magnétique. Une variation du coefficient de qualité de l'objet portatif se traduit donc par une variation d'énergie au niveau de la station fixe, tandis qu'une variation de la fréquence de résonance de l'objet portatif introduit une variation de la phase du champ magnétique de l'émission secondaire du bobinage de l'antenne par rapport au champ magnétique émis par le bobinage de la station fixe.

Le document WO 98/26370, qui constitue un art antérieur selon l'article 54 CBE paragraphes 3 et 4, montre un dispositif de télétransmission pour objet portatif muni d'une antenne, lié à une station fixe, elle-même munie d'une source d'alimentation et d'au moins une antenne assurant l'émission d'un champ magnétique alternatif et la réception de signaux envoyés par l'objet portatif, comprenant :
- des moyens de traitements et de mémorisation des données relatives à l'objet portatif ;
- un redresseur de tension assurant une transformation de la tension alternative fournie par l'antenne de l'objet portatif en une tension continue transportée par une ligne d'alimentation aux moyens de traitement et de mémorisation ;
- un régulateur de tension assurant la régulation de la tension continue issue du redresseur ; et
- des moyens de modulation des signaux à émettre comportant un transistor et un dipôle électronique montés en série, l'ensemble dipôle transistor étant monté en dérivation par rapport à la ligne d'alimentation.

Comme dans certains dispositifs de l'art antérieur décrits précédemment, le fonctionnement du régulateur SHUNT est incompatible avec une modulation par variation du coefficient de qualité, car le régulateur SHUNT 16 va compenser la modification de charge provoquée par le modulateur 18 et, par conséquent, annuler l'effet recherché.

### Exposé de l'invention

L'invention a justement pour but de résoudre les inconvénients des techniques décrites précédemment. A cette fin, elle propose un dispositif de télétransmission par couplage inductif entre un objet portatif et une station fixe. Selon l'objet de la revendication 1. Dans ce dispositif, la fonction de modulation agit sur l'antenne de l'objet portatif tout en restant compatible avec les fonctions de la téléalimentation et assure la création d'un signal détectable dans l'antenne de la station fixe. Autrement dit, le dispositif de télétransmission de l'invention permet d'obtenir une modulation de la charge de l'antenne, c'est-à-dire une modulation du coefficient de qualité de l'ensemble de l'objet portatif, tout en restant compatible avec la fonction de régulation SHUNT décrite précédemment. Ce dispositif permet également d'obtenir un taux de modulation de charge réglable ou fixé, par avance, lors de la définition des éléments du circuit électronique de l'objet portatif.

De façon plus précise, l'invention concerne un dispositif de télétransmission pour objet portatif muni d'une antenne et lié par couplage inductif à une station fixe, elle-même munie d'une source d'alimentation en énergie et d'au moins une antenne assurant l'émission d'un champ magnétique alternatif et la réception de signaux envoyés par l'objet portatif, Le dispositif comprenant :
- des moyens de traitements et de mémorisation des données relatives à l'objet portatif ;
- un redresseur de tension assurant une transformation de la tension alternative fournie par l'antenne de l'objet portatif en une tension continue transportée par une ligne d'alimentation aux moyens de traitement et de mémorisation ;
- un régulateur de tension assurant la régulation de la tension continue issue du redresseur ; et
- des moyens de modulation des signaux à émettre ;
caractérisé en ce que les moyens de modulation comportent un transistor et un dipôle électronique montés en parallèle, assurant une chute de tension entre l'entrée et la sortie desdits moyens de modulation, l'ensemble transistor/dipôle étant connecté en série sur la ligne d'alimentation entre une sortie du redresseur et une entrée du régulateur de tension pour assurer un contrôle de la tension aux bornes de l'antenne de façon à moduler le régime de courant dans ladite antenne

En effet, la tension aux bornes de l'antenne est la somme d'une tension régulée et d'une tension modulée déterminée par les valeurs choisies pour les moyens de modulation.

Selon l'invention, le dipôle électronique peut être une diode, ou bien une diode ZENER, ou encore un transistor MOS dont la grille est connectée au drain.

Selon un mode de réalisation de l'invention, le régulateur de tension comporte un transistor dont le drain et la source sont connectés sur des sorties du redresseur et un amplificateur différentiel dont la sortie est connectée sur la grille du transistor et dont les entrées reçoivent, d'une part, une tension de référence et, d'autre part, la tension de la ligne d'alimentation.

Selon un autre mode de réalisation de l'invention, le régulateur de tension comporte un transistor connecté en parallèle aux bornes de l'antenne et un amplificateur différentiel dont la sortie est connectée sur la grille du transistor et dont les entrées reçoivent, d'une part, une tension de référence et, d'autre part, la tension de la ligne d'alimentation.

Selon encore un autre mode de réalisation de l'invention, le régulateur de tension comporte un premier transistor connecté en parallèle aux bornes de l'antenne, un second transistor connecté en sortie du redresseur et un amplificateur différentiel dont les entrées reçoivent, d'une part, une tension de référence et, d'autre part, la tension de la ligne d'alimentation et dont la sortie est connectée sur un circuit répartiteur, lui-même connecté aux grilles des premier et second transistors.

### Brève description des figures

- La figure 1, déjà décrite, représente schématiquement un système d'échange de données à distance comportant un objet portatif et une station fixe ;
- la figure 2, déjà décrite, représente schématiquement un dispositif de télétransmission conforme à l'art antérieur ;
- les figures 3, 4, 5 représentent, respectivement, un premier, un deuxième et un troisième mode de réalisation du dispositif de télétransmission de l'invention.
- la figure 6 représente schématiquement un autre dispositif de télétransmission.

### Description de modes de réalisation de l'invention

L'invention concerne un dispositif de télétransmission destiné à un objet portatif téléalimenté. Ce dispositif comporte un redresseur associé à un régulateur SHUNT ainsi qu'à des moyens de modulation qui agissent sur l'antenne de l'objet portatif tout en restant compatible avec les fonctions de téléalimentation (redresseur + régulateur SHUNT) de l'objet portatif et propre à créer un signal détectable dans l'antenne de la station fixe.

Ces moyens de modulation consistent en un transistor associé à un dipôle électronique assurant une chute de tension entre l'entrée et la sortie de ces moyens de modulation ; cet ensemble transistor/dipôle est connecté à l'entrée du régulateur de tension de façon à assurer le contrôle de la tension aux bornes de l'antenne.

Les connexions entre ces moyens de modulation, le redresseur et le régulateur SHUNT peuvent être réalisées selon plusieurs modes de réalisation.

Un mode de réalisation du dispositif de télétransmission de l'invention est représenté sur la figure 3. Comme dans les exemples des figures 1 et 2, l'objet portatif comporte une antenne 12 formée par un bobinage en circuit conducteur, aux bornes duquel peut être connectée une capacité 13, formant ainsi un circuit résonant. Un redresseur de tension 15 est monté en parallèle sur les bornes de l'antenne 12 pour assurer la transformation de la tension alternative reçue par l'antenne 12 en tension continue, transportée par la ligne d'alimentation Vdd aux moyens de traitement et de mémorisation 14.

Selon un mode de réalisation de l'invention, le redresseur 15 peut être un pont de GRÄETZ qui est connecté aux deux bornes du bobinage 12 par les points de connexion 15a et 15c. Le point de connexion 15b du redresseur est connecté directement sur la ligne de sortie Vss du dispositif.

Quand au point de connexion 15d de ce redresseur, il est connecté sur l'entrée du circuit de modulation 18, appelé aussi « modulateur ». Ce modulateur 18 comporte un dipôle électronique 18b monté en parallèle sur un transistor commutateur 18a. Cet ensemble commutateur 18a et dipôle 18b est monté en série sur la ligne d'alimentation Vdd, entre le point de sortie Vr du redresseur 15 et le point d'entrée Ve de l'amplificateur différentiel 16b, qui sera décrit plus en détail par la suite ; la tension portée au niveau de cette entrée Ve (par rapport au point de masse Vss) est la tension régulée Vdd.

Le dipôle électronique 18b du modulateur 18 est choisi de façon à ce qu'il introduit une chute de tension Vr - Vdd entre les points 18c et 18d du modulateur, lorsque le transistor 18a est ouvert ; lorsque ce transistor 18a est fermé, la chute de tension introduite par le modulateur 18 doit être plus faible et, de préférence, négligeable.

On remarquera que la variation relative du coefficient de qualité de l'objet portatif est égale à la variation relative de la tension ainsi obtenue en sortie du redresseur, pour peu que l'on néglige la chute de tension aux bornes des diodes du redresseur 15. Par exemple, si la tension régulée Vdd est régulée à une valeur de 4 volts et si le circuit de modulation 18 introduit une tension de série de 1 volt lorsque le transistor 18a est ouvert, et de 0 volt lorsqu'il est fermé, alors le rapport entre l'écart de valeur et la valeur maximale, appelé profondeur de modulation du coefficient de qualité, sera d'environ 20 %.

Selon l'invention, le dipôle électronique 18b est un élément de caractéristique courant-tension non linéaire, tel que la tension à ses bornes soit pratiquement constante, ce qui permet de maintenir la profondeur de modulation du coefficient de qualité de l'objet portatif à une valeur pratiquement constante.

Selon le mode de réalisation choisi, le dipôle électronique 18b peut être une résistance, ou une diode, ou bien une diode ZENER, ou encore un transistor dans lequel la grille est connectée sur le drain.

Le dipôle électronique 18b peut aussi consister en une pluralité de diodes associées en séries.

Dans le cas où le dipôle électronique 18b est une résistance, la chute de tension entre les points 18c et 18d est fonction du courant circulant sur la ligne d'alimentation Vdd.

Dans le mode de réalisation représenté sur la figure 3, la régulateur 16 est associé à une capacité 17 connectée entre la ligne d'alimentation Vdd et la ligne de sortie Vss, de façon à fournir une tension stabilisée Vdd au niveau du point Ve.

Le régulateur 16 comporte un amplificateur différentiel 16b associé à un transistor 16a. Ce transistor 16a a son drain et sa source connectés, respectivement, à la ligne d'alimentation Vdd et à la ligne de tension de sortie Vss du dispositif. La grille du transistor 16a est connectée sur la sortie de l'amplificateur différentiel 16b, celui-ci recevant sur son entrée négative une tension de référence Vréf, référencée 16c, et sur son entrée positive, la tension au point Ve qui correspond à la tension régulée circulant sur la ligne d'alimentation Vdd.

Sur la figure 4, on a représenté un autre mode de réalisation du dispositif de l'invention. Dans ce mode de réalisation de l'invention, le régulateur 16 est connecté en sortie du circuit résonant formé par l'antenne 12 et la capacité 13. Ce régulateur 16 comporte, comme dans le mode de réalisation précédent, un transistor 16a connecté au circuit résonant 12-13 par son drain et sa source. La grille de ce transistor 16a est connectée sur la sortie de l'amplificateur différentiel 16b du circuit de régulation 16 qui lui-même reçoit, sur sa borne positive, la tension circulant sur la ligne d'alimentation Vdd et, sur sa borne négative, une tension de référence Vréf. provenant d'un générateur de tension 16c. La grille du transistor 16a est également connectée sur l'entrée d'un amplificateur 19 appartenant au circuit de démodulation qui ne sera pas décrit plus précisément car similaire aux autres circuits de démodulation utilisés classiquement sur les objets portatifs.

Le modulateur 18 qui consiste, comme dans le mode de réalisation précédent, en un dipôle électronique 18b monté en parallèle avec un transistor de commutation 18a, est monté en série entre la sortie 15d du redresseur 15 et le point de connexion Ve. Autrement dit, le modulateur est monté en série sur la ligne d'alimentation Vdd du dispositif.

Dans ce mode de réalisation, les données provenant de la station fixe et destinées à l'objet portatif sont transmises par modulation du champ magnétique émis par l'antenne de la station fixe. Cette modulation de champ magnétique provoque une modulation de la force électromagnétique induite dans le bobinage d'antenne 12 de l'objet portatif ; le régulateur SHUNT 16 réagit à cette modulation pour réguler la tension de téléalimentation Vdd. Il est alors avantageux d'exploiter le signal de commande du transistor 16a pour détecter et démoduler les données provenant de la station fixe.

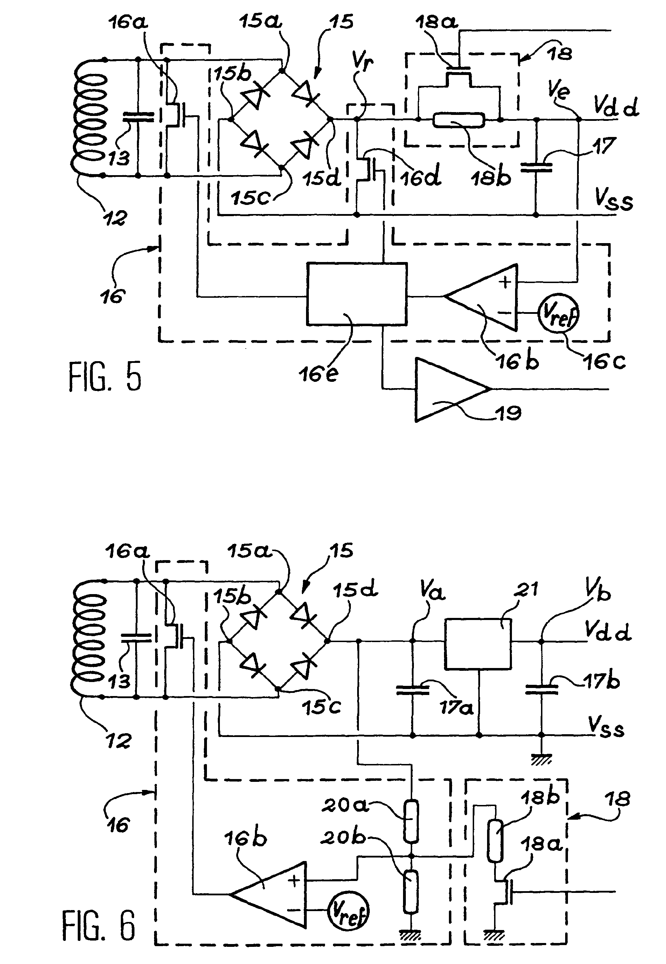

Sur la figure 5, on a représenté schématiquement un troisième mode de réalisation du dispositif de l'invention. Dans ce mode de réalisation de l'invention, le transistor 16a du régulateur 16 est connecté de façon identique au circuit de la figure 4, c'est-à-dire en parallèle entre les deux bornes du circuit résonant 12/13, et le redresseur 15 est connecté, par ses bornes 15a et 15c, en parallèle sur la capacité 13 et, par sa borne 15d, en série sur le modulateur 18.

Comme dans le mode de réalisation de la figure 4, le modulateur 18 comporte un dipôle électronique 18b monté en parallèle sur un transistor de commutation 18a, l'ensemble étant monté en série sur la ligne d'alimentation Vdd entre la sortie 15d du redresseur 15 et le point de connexion Ve.

Dans ce mode de réalisation, le régulateur comporte, en plus du transistor 16a monté en parallèle sur le circuit résonant 12/13 , un second transistor 16d monté un parallèle sur les sorties 15b et 15d du régulateur 15. Autrement dit, ce transistor 16d est monté entre la ligne d'alimentation Vdd et la ligne de sortie Vss du dispositif. La grille de chacun des transistors 16a et 16d est connectée sur un circuit supplémentaire 16e, appelé circuit de répartition, dont le rôle est de répartir la tension de commande issue de l'amplificateur différentiel 16b entre l'un ou l'autre des transistors 16a et 16d.

Le premier transistor 16a permet, en effet, de piloter la majeure partie du courant nécessaire à la régulation et le second transistor 16b permet de piloter de plus petites variations de courant, mais de manière plus rapide. Un tel régulateur SHUNT a donc l'avantage de répondre à des besoins de réactions rapides comme par exemple, lors d'un transfert de données de débit important.

Sur la figure 6, on a représenté un autre dispositif de télétransmission, dans lequel la modulation de la tension en sortie du redresseur 15 est obtenue pour une disposition du modulateur 18 différente de celle des trois modes de réalisation précédents. Dans ce mode de réalisation, le régulateur 16 comporte un transistor 16a dont le drain et la source sont connectés sur le circuit résonant 12/13 et dont la grille est connectée sur la sortie de l'amplificateur différentiel 16b. Cet amplificateur différentiel reçoit, sur sa borne négative, la tension de référence Vréf. et, sur sa borne positive, la tension issue du modulateur 18.

Le modulateur 18 comporte un transistor 18a et un dipôle électronique 18b montés en série l'un avec l'autre et connectés sur la borne négative de l'amplificateur différentiel 16b, via un pont diviseur 20a/20b. Ainsi, le modulateur 18 agit directement sur une entrée de l'amplificateur différentiel 16b, en modulant le rapport de division du pont diviseur 20a/20b alimenté par la tension redressée fournie par la ligne d'alimentation Vdd.

Il est possible également d'effectuer la modulation en ajoutant une tension modulée à la tension de référence Vréf sur la borne négative de l'amplificateur différentiel 16b.

Un tel montage permet de moduler le coefficient de qualité de l'objet portatif. Par contre, le régulateur 16 perd sa fonction de régulation ; un second régulateur, référencé 21, est donc placé sur la ligne d'alimentation Vdd, entre les points Va et Vb, qui sont les points de connexion de deux capacités 17a et 17b connectées, en parallèle l'une avec l'autre, entre la ligne d'alimentation Vdd et la ligne de sortie Vss du dispositif ; le rôle de ces deux capacités 17a et 17b montées en parallèle est identique à celui de la capacité de stockage 17 des figures 3, 4 et 5.

Le dispositif de la figure 6 a l'avantage de permettre une profondeur de modulation ajustable par un choix des valeurs des résistances 20a, 20b formant le pont diviseur.

## Revendications

1. Dispositif de télétransmission pour objet portatif (10) muni d'une antenne (12) et lié par couplage inductif à une station fixe (1), elle-même munie d'une source d'alimentation en énergie et d'au moins une antenne (3, 4) assurant l'émission d'un champ magnétique alternatif et la réception de signaux envoyés par l'objet portatif (10), le dispositif comprenant :
- des moyens (14) de traitements et de mémorisation des données relatives à l'objet portatif (10) ;
- un redresseur de tension (15) assurant une transformation de la tension alternative fournie par l'antenne (12) de l'objet portatif (10) en une tension continue transportée par une ligne d'alimentation (Vdd) aux moyens (14) de traitement et de mémorisation ;
- un régulateur de tension (16) assurant la régulation de la tension continue issue du redresseur (15) ; et
- des moyens de modulation (18) des signaux à émettre ;
**caractérisé en ce que** les moyens de modulation (18) comportent un transistor (18a) et un dipôle électronique (18b) montés en parallèle, assurant une chute de tension entre l'entrée et la sortie desdits moyens de modulation, l'ensemble transistor/dipôle étant connecté en série sur la ligne d'alimentation (Vdd), entre une sortie (Vr) du redresseur (15) et une entrée (Ve) du régulateur de tension (16), pour assurer un contrôle de la tension aux bornes de l'antenne (12) de façon à moduler le régime de courant dans ladite antenne (12).

2. Dispositif selon la revendication 1, **caractérisé en ce que** le dipôle électronique est une diode ZENER.

3. Dispositif selon la revendication 1, **caractérisé en ce que** le dipôle électronique est une diode.

4. Dispositif selon la revendication 1, **caractérisé en ce que** le dipôle électronique est un transistor MOS dont la grille est connectée au drain.

5. Dispositif selon l'une quelconque des revendications 1 à 4, **caractérisé en ce que** le régulateur de tension (16) comporte un transistor (16a) dont le drain et la source sont connectés en sortie du redresseur (15) et un amplificateur différentiel (16b) dont la sortie est connectée sur la grille du transistor (16a) et dont les entrées reçoivent, d'une part, une tension de référence (Vref) et, d'autre part, la tension de la ligne d'alimentation (Vdd).

6. Dispositif selon l'une quelconque des revendications 1 à 4, **caractérisé en ce que** le régulateur de tension (16) comporte un transistor (16a) connecté en parallèle aux bornes de l'antenne (12) et un amplificateur différentiel (16b) dont la sortie est connectée sur la grille du transistor (16a) et dont les entrées reçoivent, d'une part, une tension de référence (Vref) et, d'autre part, la tension de la ligne d'alimentation (Vdd).

7. Dispositif selon l'une quelconque des revendications 1 à 4, **caractérisé en ce que** le régulateur de tension (16) comporte un premier transistor (16a) connecté en parallèle aux bornes de l'antenne, un second transistor (16d) connecté en sortie du redresseur et un amplificateur différentiel (16b) dont les entrées reçoivent, d'une part, une tension de référence (Vref) et, d'autre part, la tension de la ligne d'alimentation (Vdd) et dont la sortie est connectée sur un circuit répartiteur (16e), lui-même connecté aux grilles des premier et second transistors (16a, 16b).

8. Dispositif selon l'une quelconque des revendications 1 à 7, **caractérisé en ce qu'**il comporte des moyens de démodulation (19) pour démoduler les signaux reçus de la station fixe.

## Claims

1. Remote transmission apparatus for a portable object (10) equipped with an antenna (12) and connected by inductive coupling to a fixed station (1) that is equipped with a power supply and at least one antenna (3, 4) that emits an alternating magnetic field and receives signals transmitted by the portable object (10), the apparatus comprising:
- means (14) for processing and storing data concerning the portable object;
- a voltage rectifier (15) for transforming the AC voltage supplied by the antenna (12) into a DC voltage carried by a power line (Vdd) to the processing and storing means;
- a voltage regulator (16) for regulating the DC voltage provided by the rectifier; and
- means (18) for modulating the signals to be transmitted;
**characterized in that** the modulation means (18) comprise a transistor (18a) and an electronic dipole (18b) in parallel, ensuring a drop in voltage between the input and output of said modulation means, the transistor-dipole assembly being connected in series to the supply line (Vdd), between an output (Vr) of the rectifier (15) and an input (Ve) of the voltage regulator (16), so as to ensure a voltage control at the terminals of antenna (12) so as to modulate the current flow conditions in said antenna (12).

2. Apparatus of claim 1, **characterized in that** the electronic dipole is a Zener diode.

3. Apparatus of claim 1, **characterized in that** the electronic dipole is a diode.

4. Apparatus of claim 1, **characterized in that** the electronic dipole is a MOS transistor whose gate is connected to the drain.

5. Apparatus of any one of claims 1 to 4, **characterized in that** the voltage regulator (16) comprises a transistor (16a) whose drain and source are connected to the output of the rectifier (15) and a differential amplifier (16b) whose output is connected to the gate of the transistor and whose inputs receive both a reference voltage (Vref) and the voltage of the power supply line (Vdd).

6. Apparatus of any one of claims 1 to 4, **characterized in that** the voltage regulator (16) comprises a transistor (16a) connected in parallel to the terminals of the antenna (12) and a differential amplifier (16b) whose output is connected to the gate of the transistor and whose inputs receive both a reference voltage (Vref) and the voltage from the power supply line (Vdd).

7. Apparatus of any one of claims 1 to 4, **characterized in that** the voltage regulator (16) comprises a first transistor (16a) connected in parallel to the terminals of the antenna, a second transistor (16d) connected to the output of the rectifier and a differential amplifier (16b) whose inputs receive both a reference voltage (Vref) and the voltage from the power supply line (Vdd), and whose output is connected to a distributor circuit (16e) that is in turn connected to the gates of the first and second transistors.

8. Apparatus of any of claims 1 to 7, **characterized in that** it comprises demodulation means (19) for demodulating the signals received from the fixed station.

## Patentansprüche

1. Fernübertragungsvorrichtung für einen tragbaren Gegenstand (10), ausgestattet mit einer Antenne (12) und durch induktive Kopplung mit einer ortsfesten Station (1) verbunden, die ihrerseits ausgestattet ist mit einer Energieversorgungsquelle und wenigstens einer Antenne (3, 4) für die Ausstrahlung eines magnetischen Wechselfelds und den Empfang der durch den tragbaren Gegenstand (10) gesendeten Signale, wobei die Vorrichtung umfasst:
- Einrichtungen (14) zur Verarbeitung und Speicherung der den tragbaren Gegenstand (10) betreffenden Daten;
- einen Spannungsgleichrichter (15) zur Umwandlung der durch die Antenne (12) des tragbaren Gegenstands (10) gelieferten Wechselspannung in eine Gleichspannung, durch eine Versorgungsleitung (Vdd) verbunden mit den Verarbeitungs- und Speichereinrichtungen (14);
- einen Spannungsregler (16) zur Regelung der aus dem Gleichrichter (15) stammenden Gleichspannung; und
- Modulationseinrichtungen (18) der zu sendenden Signale;
**dadurch gekennzeichnet, dass** die Modulationseinrichtungen (18) einen Transistor (18a) und einen elektronischen Dipol (18b) umfassen, die parallelgeschaltet sind und einen Spannungsabfall zwischen dem Eingang und dem Ausgang der genannten Modulationseinrichtung bewirken, wobei die Transistor/Dipol-Einheit in der Versorgungsleitung (Vdd) in Serie geschaltet ist zwischen einem Ausgang (Vr) des Gleichrichters (15) und einem Eingang (Ve) des Spannungsreglers (16), um eine Kontrolle der Spannung an den Anschlüssen der Antenne (12) zu gewährleisten, zur Modulation des Strombetriebs in dieser Antenne (12).

2. Vorrichtung nach Anspruch 1, **dadurch gekennzeichnet, dass** der elektronische Dipol eine Zenerdiode ist.

3. Vorrichtung nach Anspruch 1, **dadurch gekennzeichnet, dass** der elektronische Dipol eine Diode ist.

4. Vorrichtung nach Anspruch 1, **dadurch gekennzeichnet, dass** der elektronische Dipol ein MOS-Transistor ist, dessen Gate mit dem Drain verbunden ist.

5. Vorrichtung nach einem der Ansprüche 1 bis 4, **dadurch gekennzeichnet, dass** der Spannungsregler (16) einen Transistor (16a), dessen Drain und Source mit dem Ausgang des Gleichrichters (15) verbunden sind, und einen Differentialverstärker (16b) umfasst, dessen Ausgang mit dem Gate des Transistors (16a) verbunden ist und an dessen Eingängen einerseits eine Bezugsspannung (Vref) und andererseits die Spannung der Versorgungsleitung (Vdd) liegt.

6. Vorrichtung nach einem der Ansprüche 1 bis 4, **dadurch gekennzeichnet, dass** der Spannungsregler (16) einen zu den Anschlüssen der Antenne (12) parallelgeschalteten Transistor (16a) und einen Differentialverstärker (16b) umfasst, dessen Ausgang mit dem Gate des Transistors (16a) verbunden ist und an dessen Eingängen einerseits eine Bezugsspannung (Vref) und andererseits die Spannung der Versorgungsleitung (Vdd) liegt.

7. Vorrichtung nach einem der Ansprüche 1 bis 4, **dadurch gekennzeichnet, dass** der Spannungsregler (16) einen zu den Anschlüssen der Antenne (12) parallelgeschalteten ersten Transistor (16a), einen mit dem Ausgang des Gleichrichters verbundenen zweiten Transistor (16d) und einen Differentialverstärker (16b) umfasst, an dessen Eingängen einerseits eine Bezugsspannung (Vref) und andererseits die Spannung der Versorgungsleitung (Vdd) liegt und dessen Ausgang mit einer Verteiferschaltung (16e) verbunden ist, die ihrerseits mit den Gates des ersten und zweiten Transistors (16a, 16b) verbunden ist.

8. Vorrichtung nach einem der Ansprüche 1 bis 7, **dadurch gekennzeichnet, dass** sie Demodulationseinrichtungen (19) zur Demodulation der von der ortsfesten Station gesendeten Signale umfasst.
